# EUROPEAN PATENT APPLICATION

(11) **EP 4 830 921 A1**
(43) Date of publication of application: **28.10.2026**
(21) Application number: 25738766.2
(22) Date of filing: 08.01.2025
(51) Int. Cl.: B32B 37/00, B29C 65/08, B32B 5/24, B32B 27/12

(54) **LAMINATED SHEET FOR WEARABLE ARTICLE, MANUFACTURING METHOD FOR LAMINATED SHEET FOR WEARABLE ARTICLE, AND MANUFACTURING SYSTEM FOR LAMINATED SHEET FOR WEARABLE ARTICLE**

(30) Priority: 09.01.2024 JP 2024001535; 29.02.2024 JP 2024029808
(71) Applicant: Zuiko Corporation, Ibaraki-shi Osaka 5670082 (JP)
(72) Inventor: KOSHIJIMA, Miwa, Ibaraki-shi, Osaka 567-0082 (JP)
(74) Representative: SSM Sandmair
(86) International application number: PCT/JP2025/000285
(87) International publication number: WO 2025/150498

(57) **Abstract**

Provided are a laminated sheet having a low basis weight and a high elongation, and a method and a system for manufacturing the laminated sheet. A method for manufacturing a laminated sheet for a wearing article includes a film formation step (P1), a cooling step (P2), a layering step (P4), and a welding step (P5). In the film formation step, a film is formed by extruding a raw material having been melted. In the cooling step, the extruded film is cooled. In the layering step, a nonwoven fabric sheet being in a state of natural length and the film having elasticity, being conveyed, and being in a state of natural length or being stretched in a conveyance direction and being at an elongation of 15% or less are layered. In the welding step, the film and the nonwoven fabric sheet having been layered and being conveyed are welded to form a laminated sheet.

## Description

### Technical Field

The present invention relates to a laminated sheet for a wearing article, and a method and a system for manufacturing the laminated sheet for a wearing article.

### Background Art

Conventionally, for example, as disclosed in Patent Literature 1 (JP 2018-513043 A) and Patent Literature 2 (JP 7267498 B2), a method and an apparatus for manufacturing a laminated sheet having stretchability by laminating a nonwoven fabric and a film-shaped elastic material are known.

In a process for manufacturing a laminated sheet of Patent Literature 1 (JP 2018-513043 A), a portion of a nonwoven component of a laminate is strained and at least partially deformed through an activation unit, whereby a laminated web is activated to be stretchable.

In a method for manufacturing a laminated sheet of Patent Literature 2 (JP 7267498 B2), a laminated sheet is manufactured by laminating an elastic film in a stretched state with nonwoven fabrics.

### Citation List

### Patent Literature

Patent Literature 1: JP 2018-513043 A
Patent Literature 2: JP 7267498 B2

### Summary of Invention

### Technical Problem

However, in the process of Patent Literature 1 (JP 2018-513043 A), an elongation of the laminated web depends on a deformation amount of the portion of the nonwoven component that does not stretch much, and thus it is difficult to obtain a laminated sheet having a high elongation.

Further, in the manufacturing method of Patent Literature 2 (JP 7267498 B2), an elongation of the laminated sheet depends on the elongation of the elastic film before lamination, and in order to obtain a sheet having a high elongation, it is necessary to laminate the elastic film in a greatly stretched state with the nonwoven fabrics. However, in order to obtain a high elongation, an amount of nonwoven fabric used per unit area of the laminated sheet increases, and it is not easy to manufacture a laminated sheet having a high elongation and a low basis weight.

It is an object of the present invention to provide a laminated sheet having a low basis weight and a high elongation, and a method and a system for manufacturing the laminated sheet.

### Solution to Problem

A method for manufacturing a laminated sheet for a wearing article of the present invention includes a film formation step, a cooling step, a layering step, and a welding step. In the film formation step, a film is formed by extruding a raw material having been melted. In the cooling step, the film having been extruded is cooled. In the layering step, a nonwoven fabric being in a state of natural length and the film having elasticity, being conveyed, and being in a state of natural length are layered. Alternatively, in the layering step, a nonwoven fabric being in a state of natural length and the film having elasticity, being conveyed, and being stretched in a conveyance direction and being at an elongation of 15% or less are layered. In the welding step, the film and the nonwoven fabric having been layered and being conveyed are welded to form a laminated sheet.

A system for manufacturing a laminated sheet for a wearing article of the present invention includes a film formation apparatus, a cooling apparatus, a layering apparatus, and a welding apparatus. The film formation apparatus is configured to form a film by extruding a raw material having been melted. The cooling apparatus is configured to cool the film having been extruded. The layering apparatus is configured to layer a nonwoven fabric being in a state of natural length and the film having elasticity, being conveyed, and being in a state of natural length. Alternatively, the layering apparatus is configured to layer a nonwoven fabric being in a state of natural length and the film having elasticity, being conveyed, and being stretched in a conveyance direction and being at an elongation of 15% or less. The welding apparatus is configured to weld the film and the nonwoven fabric having been layered and being conveyed, to form a laminated sheet.

In a laminated sheet for a wearing article of the present invention, a film having elasticity and a nonwoven fabric are laminated. The film and the nonwoven fabric are integrated by welding. When the nonwoven fabric is at a natural length, tension does not act on the film.

### Advantageous Effects of Invention

In the method and the system for manufacturing a laminated sheet of the present invention, it is possible to manufacture a laminated sheet having a low basis weight (a low weight of a nonwoven fabric per unit area) and a high elongation.

The laminated sheet of the present invention has a low basis weight (a low weight of a nonwoven fabric per unit area) and a high elongation.

### Brief Description of Drawings

Fig. 1 is a schematic view illustrating an overall configuration of a system for manufacturing a laminated sheet according to an embodiment of the present invention.
Fig. 2 is a schematic cross-sectional view of a laminated sheet in which a film is in a non-stretched state.
Fig. 3 is a schematic view of a wearing article using the laminated sheets.
Fig. 4 is a control block diagram of the system for manufacturing a laminated sheet in Fig. 1.
Fig. 5 is a schematic flowchart of a method for manufacturing a laminated sheet according to the embodiment of the present invention.
Fig. 6A is a schematic enlarged view of a stretching roll and a horn of the system for manufacturing a laminated sheet in Fig. 1.
Fig. 6B is a view depicting an arrangement of protrusions formed on a surface of the stretching roll of the system for manufacturing a laminated sheet in Fig. 1.
Fig. 7 is a view illustrating an example of an arrangement of welded portions formed in the laminated sheet.
Fig. 8 includes a schematic partially enlarged plane of the laminated sheet before gear stretching, and a schematic cross-sectional view taken along arrows X1-X1 in the schematic partially enlarged plan view.
Fig. 9 includes a schematic partially enlarged plane of the laminated sheet after gear stretching, and a schematic cross-sectional view taken along arrows X2-X2 in the schematic partially enlarged plan view.
Fig. 10A is a view illustrating another example of the arrangement of the welded portions formed in the laminated sheet.
Fig. 10B is a view illustrating still another example of the arrangement of the welded portions formed in the laminated sheet.
Fig. 10C is a view illustrating yet another example of the arrangement of the welded portions formed in the laminated sheet.
Fig. 11A is a view illustrating another example of a shape of the welded portions formed in the laminated sheet.
Fig. 11B is a view illustrating still another example of the shape of the welded portions formed in the laminated sheet.
Fig. 11C is a view illustrating yet another example of the shape of the welded portions formed in the laminated sheet.
Fig. 12 is a schematic view of a laminated sheet stretching mechanism for stretching the laminated sheet in a direction orthogonal to a conveyance direction of the laminated sheet.
Fig. 13 is a schematic flowchart of a method for manufacturing a laminated sheet according to another example.
Fig. 14 is a schematic view depicting a stretching step in the method for manufacturing a laminated sheet in Fig. 13.

### Description of Embodiment

A laminated sheet, and a system and a method for manufacturing the laminated sheet according to an embodiment of the present invention will be described with reference to the drawings.

### (1) Laminated Sheet

A laminated sheet L is a sheet used for a wearing article.

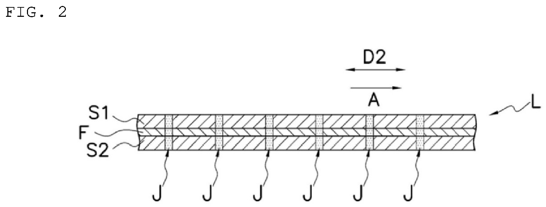

The laminated sheet L is a sheet having stretchability formed by laminating a plurality of sheets/films. As illustrated in Fig. 2, the laminated sheet L includes a film F having elasticity (having stretchability), a first nonwoven fabric sheet S1, and a second nonwoven fabric sheet S2. In the laminated sheet L, the film F is arranged between the first nonwoven fabric sheet S1 and the second nonwoven fabric sheet S2. In the laminated sheet L, the first nonwoven fabric sheet S1 and the film F, and the second nonwoven fabric sheet S2 and the film F are intermittently welded at welded portions J. In other words, in the laminated sheet L, the film F and a nonwoven fabric (here, each of the first nonwoven fabric sheet S1 and the second nonwoven fabric sheet S2) are integrated by welding.

Note that, here, a three-layer structure of the first nonwoven fabric sheet S1, the second nonwoven fabric sheet S2, and the film F will be described as an example. However, the laminated sheet L may include a sheet/film other than the film F and the nonwoven fabric sheets S1, S2, and in the laminated sheet L, four or more sheets/films may be laminated. In addition, the laminated sheet may have a two-layer structure of one of the first nonwoven fabric sheet S1 and the second nonwoven fabric sheet S2, and the film F.

The laminated sheet L of the present embodiment is manufactured by layering a nonwoven fabric (here, each of the first nonwoven fabric sheet S1 and the second nonwoven fabric sheet S2) being at a natural length and the film F having elasticity and being in a state of natural length, and by welding them to each other.

Alternatively, in the laminated sheet L of the present embodiment, the nonwoven fabric being at a natural length and the film F having elasticity and not being substantially stretched in a conveyance direction A are laminated. Specifically, the laminated sheet L of the present embodiment is manufactured by layering the nonwoven fabric being at a natural length and the film F having elasticity, being conveyed, and being stretched in the conveyance direction A and being at an elongation of 15% or less, and by welding them to each other. More preferably, the laminated sheet L of the present embodiment is manufactured by layering the nonwoven fabric being at a natural length and the film F having elasticity, being conveyed, and being stretched in the conveyance direction A and being at an elongation of 10% or less, and welding them to each other.

Note that in the above description, the nonwoven fabric or the film F being at a natural length is not limited to a case in which the nonwoven fabric is being completely at a natural length, and includes a case in which the nonwoven fabric is being substantially at a natural length (for example, a case of being slightly stretched due to tension).

The laminated sheet L is manufactured by the method as described above, and thus, in a state where no force acts on the laminated sheet L, the nonwoven fabric (here, each of the first nonwoven fabric sheet S1 and the second nonwoven fabric sheet S2) and the film F are in a state substantially parallel to each other as illustrated in Fig. 2. In other words, in the state where no force acts on the laminated sheet L, the laminated sheet L is in a substantially flat state. In addition, when the nonwoven fabric of the laminated sheet L is at a natural length (in a state where tension is not applied to the laminated sheet L), tension does not act on the film F. Note that the phrase "when the nonwoven fabric of the laminated sheet L is at a natural length, tension does not act on the film F" includes a case in which tension acting on the film F is substantially zero.

The laminated sheet L of the present invention is used for a wearing article. Specifically, for example, a sheet piece to be cut from the laminated sheet L along a direction orthogonal to the conveyance direction A to be described later is used for the wearing article. Note that, here, a sheet piece to be cut from the laminated sheet L is also simply referred to as the laminated sheet L. The wearing article is, for example, a disposable diaper, a disposable medical gown, or the like, though the type of wearing article for which the laminated sheet L is used is not limited thereto. In addition, the laminated sheet L can be widely applied to, for example, a waist member to be worn around a waist of a wearer, a cuff member to be worn around a wrist of a wearer, a hem member to be worn on an ankle of a wearer, and the like in wearing articles, though the application of the laminated sheet L is not limited thereto.

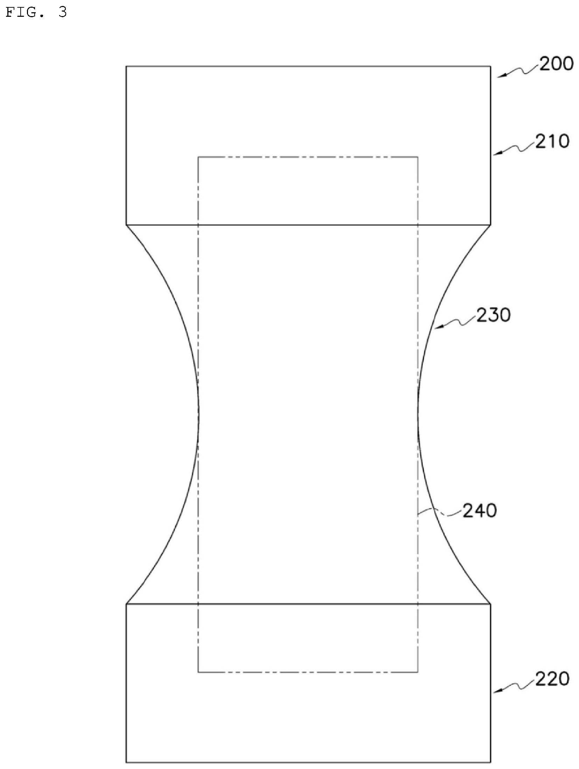

As an example, a disposable diaper as a wearing article 200 for which the laminated sheet L is used will be described with reference to Fig. 3.

As illustrated in Fig. 3, the wearing article 200 includes a front torso portion 210, a back torso portion 220, a crotch portion 230, and an absorbent article 240. In the wearing article 200, the front torso portion 210 and the back torso portion 220 are provided with an interval therebetween. When the wearing article 200 is worn, the front torso portion 210 and the back torso portion 220 face each other. The crotch portion 230 is connected to the front torso portion 210 and the back torso portion 220. The front torso portion 210 and the back torso portion 220 are connected via the crotch portion 230. The absorbent article 240 is arranged across the crotch portion 230. When the wearing article 200 is worn, the wearing article 200 is bent at the crotch portion 230, and the front torso portion 210 is arranged on the abdominal side and the back torso portion 220 is arranged on the back side. In addition, when the wearing article 200 is worn, the front torso portion 210 and the back torso portion 220 are fastened by a fastening member such as a tape (not illustrated).

In the wearing article 200, the laminated sheet L is used for each of the front torso portion 210 and the back torso portion 220. The laminated sheet L is used for each of the front torso portion 210 and the back torso portion 220 in a state where the conveyance direction A described above and a waist width direction coincide with each other.

### (2) Outline of System and Method for Manufacturing Laminated Sheet

Outline of a system 100 for manufacturing the laminated sheet L and a method for manufacturing the laminated sheet L is as follows.

The manufacturing system 100 manufactures the film F having stretchability from a predetermined raw material. The manufacturing system 100 forms the laminated sheet L by conveying the film F having been produced, by merging the pair of nonwoven fabric sheets S1, S2 with the conveyed film F, and by welding the pair of nonwoven fabric sheets S1, S2 and the film F in a state where the film F is arranged between the pair of nonwoven fabric sheets S1, S2 (in a state where the film F and the nonwoven fabric sheets S1, S2 are layered). In the manufacturing system 100, when the film F and the nonwoven fabric sheets S1, S2 are laminated, the nonwoven fabric sheets S1, S2 each being at a natural length and the film F having elasticity and being in a state of natural length are laminated. Alternatively, in the manufacturing system 100, the nonwoven fabric sheets S1, S2 each being at a natural length and the film F having elasticity and being stretched in the conveyance direction A and being at an elongation of 15% or less are laminated, and further, in the manufacturing system 100, the laminated sheet L is stretched (subjected to gear stretching) by gear rolls 62, 64 in order to improve air permeability of the laminated sheet L (specifically, air permeability of the film F of the laminated sheet L) or the stretchability of the laminated sheet L.

Details of the system 100 for manufacturing the laminated sheet L and the method for manufacturing the laminated sheet L will be described later.

### (3) Details of System for Manufacturing Laminated Sheet

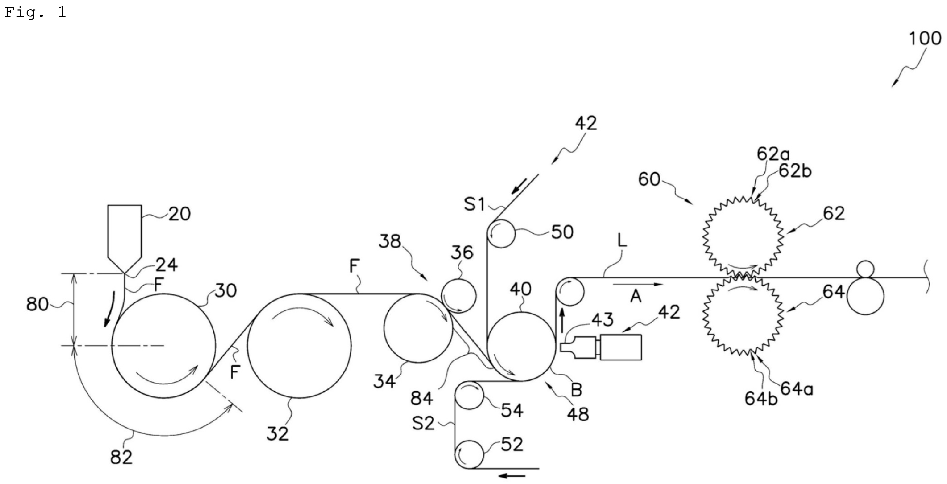

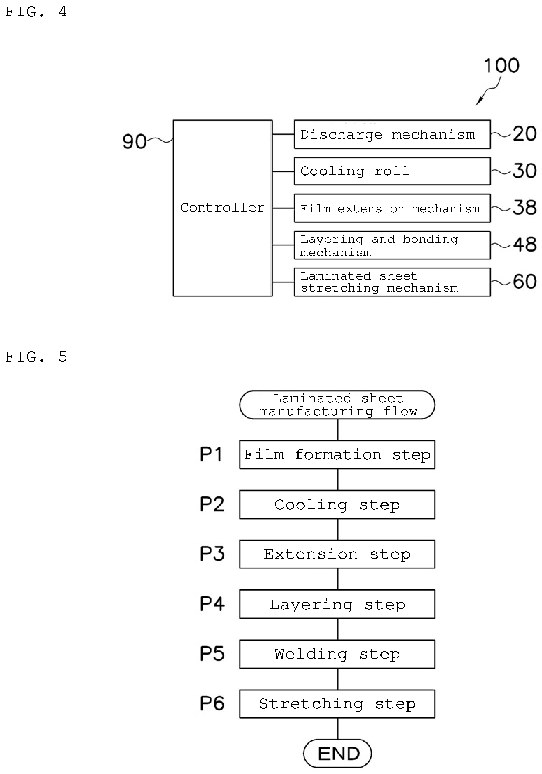

As illustrated in Figs. 1 and 4, the manufacturing system 100 mainly includes a discharge mechanism 20, a cooling roll 30, a film stretching mechanism 38, a layering and bonding mechanism 48, a laminated sheet stretching mechanism 60, and a controller 90.

### (3-1) Discharge Mechanism

The discharge mechanism 20 is an example of a film formation apparatus in the claims. The discharge mechanism 20 is an apparatus that forms a film (more specifically, a film before reaching a stable state in terms of stretchability) from a resin material serving as a raw material. Here, the film before reaching a stable state in terms of stretchability is also referred to as the film F. Note that the meaning of the description that stretchability reaches stability will be described later. Specifically, the discharge mechanism 20 heats and melts the resin material to a temperature higher than a temperature region in which the resin material is elastically deformed, and forms the film F by extruding, through a discharge outlet 24, the resin material having been melted. The film F formed by the discharge mechanism 20 is conveyed to the cooling roll 30 disposed below the discharge mechanism 20 as illustrated in Fig. 1.

Note that the resin material is, for example, a material containing a thermoplastic elastic resin as a main component, and is a material exhibiting elasticity at room temperature. Although not limited thereto, for example, as described in Patent Literature (WO 2019/150801 A), a thermoplastic elastomer defined in JIS K 6418:2007 (ISO 18064:2003) is used for the resin material.

For example, for the resin material, a mixture of a plurality of types of resins having different conditions under each of which stretchability reaches stability is used. For example, a mixture of two types of resins is used for the resin material, and a styrene-based resin is used as a first resin and an olefin-based resin is used as a second resin. Here, the first resin (styrene-based resin) is a resin whose stretchability reaches a stable state at an earlier stage than that of the second resin (olefin-based resin) (that is, at a temperature higher than that of the olefin-based resin). Note that the phrase "stretchability reaches a stable state" means reaching a state in which, when the resin material is deformed by applying an external force at a slight level (level at which the resin material is not plastically deformed by exceeding the range of elastic deformation) and then the application of a load of the external force is stopped, the resin material returns to its original form (in other words, it means reaching a state of elastic deformation).

For example, in a case where two types of resins are used, the resin material may consist of only a styrene-based resin as the first resin and an olefin-based resin as the second resin. Further, the resin material may comprise a styrene-based resin as the first resin, an olefin-based resin as the second resin, and another component. For example, in a case where the resin material uses a styrene-based resin as the first resin and an olefin-based resin as the second resin, the total content of the first resin and the second resin is preferably 90% by weight or more. Note that examples of another component include a fatty acid amide, a wax, an antioxidant, a tackifier resin, a softening agent, an antibacterial agent, a light stabilizer, an ultraviolet absorber, a dye, a lubricant, and a pigment.

Specific examples of the contents in a case where for the resin material, a styrene-based resin is used as the first resin and an olefin-based resin is used as the second resin will be described.

The content of the styrene-based resin is 0 to 85% by weight. Note that, from the viewpoint of enabling further greatly increasing formability and stretchability and stress relaxation characteristics of a resulting stretchable member, the content of the styrene-based resin is preferably 40 to 80% by weight, more preferably 50 to 80% by weight, still more preferably 60 to 80% by weight, and particularly preferably 65 to 75% by weight.

The content of the olefin-based resin is 15 to 100% by weight. Note that, from the viewpoint of enabling further greatly increasing formability and stretchability of a resulting stretchable member, the content of the olefin-based resin is preferably 20 to 60% by weight, more preferably 20 to 50% by weight, still more preferably 20 to 40% by weight, and particularly preferably 25 to 35% by weight.

A weight ratio between the styrene-based resin and the olefin-based resin is preferably 1 : 0.33 to 0.54, and the content of the styrene-based resin and the olefin-based resin in the entire resin material is 90% by weight or more.

### (3-2) Cooling Roll

The cooling roll 30 is an example of a cooling apparatus in the claims. The cooling roll 30 cools the film F.

The cooling roll 30 is rotationally driven by a drive device such as a motor (not illustrated). Inside the cooling roll 30, a flow passage (not illustrated) through which a fluid for cooling the film F flows is formed.

The film F formed by the discharge mechanism 20 is supplied to the cooling roll 30. Note that the film F discharged through the discharge outlet 24 of the discharge mechanism 20 is stretched in a first section 80 (see Fig. 1) that is up to the cooling roll 30. In order to achieve this, the cooling roll 30 rotates at a peripheral speed higher than the feeding speed of the resin material at the time when the resin material is discharged through the discharge outlet 24 of the discharge mechanism 20, and stretches the film F until the thickness of the film F reaches a predetermined value.

The cooling roll 30 is rotationally driven by the drive device, and conveys the film F along an outer peripheral surface of the cooling roll 30. The cooling roll 30 cools the film F to a first temperature in a second section 82 where the film F is in contact with the outer peripheral surface of the cooling roll 30. The first temperature is a temperature at which for at least one of the resins forming the raw material of the film F, the stretchability reaches a stable state. For example, in a case where the raw material is a mixture of a styrene-based resin and an olefin-based resin, the first temperature is a temperature at which the stretchability of the olefin-based resin does not reach a stable state and the stretchability of the styrene-based resin reaches a stable state. For example, in a case where the raw material is a mixture of three or more types of resins, the first temperature is a temperature at which at least one type of resin reaches a stable state and the remaining types of resins do not reach a stable state.

Note that the first temperature may be, for example, a temperature determined theoretically or a temperature determined by experiment or simulation.

Note that a time after melting of the resin material also affects the stability of the stretchability of the resin, and thus a conveyance speed, a conveyance distance (the diameter of the cooling roll 30), and the like of the film F, achieved by the cooling roll 30 may be designed such that the stretchability of at least one of the resins forming the raw material of the film F reaches a stable state.

The film F cooled by the cooling roll 30 is fed to the film stretching mechanism 38 via a guide roll 32. Note that, here, it is assumed that the film F is cooled by simply using the cooling roll 30, but the mode is not limited to such a mode, and the guide roll 32 may also have a cooling function, and the film F may be cooled by both the cooling roll 30 and the guide roll 32.

### (3-3) Film Stretching Mechanism

The film stretching mechanism 38 is an example of an extension apparatus in the claims. The film stretching mechanism 38 stretches the film F to reduce a thickness of the film F. The cooling roll 30 supplies the film F in a state where some resin of the resins has not yet reached stability in terms of stretchability, to the film stretching mechanism 38.

The film stretching mechanism 38 mainly includes a draw roll 34, a pinch roll 36, and a stretching roll 40. The draw roll 34 is rotationally driven by a drive device such as a motor (not illustrated). The stretching roll 40 is rotationally driven by a drive device such as a motor (not illustrated).

The draw roll 34 and the pinch roll 36 are disposed adjacent to each other. The draw roll 34 and the pinch roll 36 sandwich the film F such that the film F conveyed from the cooling roll 30 to the draw roll 34 does not slide along an outer peripheral surface of the draw roll 34. The draw roll 34 rotates in synchronization with the cooling roll 30.

The film F is stretched by the film stretching mechanism 38 in a third section 84, which is from between the draw roll 34 and the pinch roll 36 up to the stretching roll 40. In order to achieve this, the stretching roll 40 rotates at a peripheral speed faster than the peripheral speed of the draw roll 34. The film stretching mechanism 38 stretches the film F at an elongation of 130% or less, for example, though a numerical value is not limited thereto. Note that, since the film F stretched by the film stretching mechanism 38 is in a state where some resin of the resins has not yet reached stability in terms of stretchability, the stretched film F is not elastically deformed (not deformed in a manner to return to an original state when application of a force is stopped), but is reduced in its thickness by being stretched.

Note that the elongation (how much the film F is stretched) of the film F in the film stretching mechanism 38 is determined in accordance with components of resins forming the raw material. For example, in a case where the raw material is a mixture of a styrene-based resin and an olefin-based resin, the elongation is set higher as the blending ratio of the olefin-based resin is higher. In other words, in the case where the raw material is a mixture of a styrene-based resin and an olefin-based resin, the elongation is set higher as the blending ratio of the resin (olefin-based resin) that has not yet reached a stable state in terms of stretchability is higher. Note that, in a case where a resin of a type other than the mixture of a styrene-based resin and an olefin-based resin is used for the raw material, or in a case where three or more types of resins are used, the elongation is set higher as the blending ratio of a resin that has not yet reached a stable state in terms of stretchability is higher, in the film F supplied to the film stretching mechanism 38.

Note that the film stretching mechanism 38 may be omitted, and an extension step of the film F may be omitted. However, by developing the film F to reduce the thickness thereof, the laminated sheet L having a low basis weight (here, a low weight of the film F per unit area) can be manufactured, and the amount of the material used can be reduced.

### (3-4) Layering and Bonding Mechanism

The layering and bonding mechanism 48 is an example of a layering apparatus and a welding apparatus in the claims. Note that in the present embodiment, the layering and bonding mechanism 48 functions as the layering apparatus and the welding apparatus (in particular, here, the stretching roll 40 functions as a part of the extension apparatus, as a part of the layering apparatus, and as a part of the welding apparatus). However, the layering apparatus and the welding apparatus may be independent apparatuses.

By way of an outline, the layering and bonding mechanism 48 forms a layered body B by layering the nonwoven fabric sheets S1, S2 and the film F. In particular, in the present embodiment, the layering and bonding mechanism 48 forms the layered body B in which the film F is arranged between the pair of nonwoven fabric sheets S1, S2.

Note that in an example, the layering and bonding mechanism 48 as the layering apparatus layers the first nonwoven fabric sheet S1 and the second nonwoven fabric sheet S2 each being in a state of natural length (including a case of substantially natural length) and the film F having elasticity and being in a state of natural length (including a case of substantially natural length). In another example, the layering and bonding mechanism 48 layers the first nonwoven fabric sheet S1 and the second nonwoven fabric sheet S2 each being in a state of natural length (including a case of substantially natural length) and the film F having elasticity, being conveyed, and being stretched in the conveyance direction and being at an elongation of 15% or less.

Further, the layering and bonding mechanism 48 welds the layered body B (the film F and the nonwoven fabric sheets S1, S2 having been layered and being conveyed) to form the laminated sheet L. The layering and bonding mechanism 48 presses a horn 43 of an ultrasonic bonding apparatus 42 against the stretching roll 40 functioning as an anvil roll to weld the film F and the nonwoven fabric sheets S1, S2.

### <Function of Layering and Bonding Mechanism 48 as Layering Apparatus>

The continuous first nonwoven fabric sheet S1 that is fed from a raw fabric roll (not illustrated) is supplied to the stretching roll 40 of the layering and bonding mechanism 48 via a guide roll 50. In addition, the continuous second nonwoven fabric sheet S2 that is fed from a raw fabric roll (not illustrated) is supplied to the stretching roll 40 via guide rolls 52, 54. In the layering and bonding mechanism 48, the film F conveyed along the stretching roll 40 is sandwiched between the first nonwoven fabric sheet S1 and the second nonwoven fabric sheet S2 conveyed to the stretching roll 40, and the layered body B in which the film F is arranged between the pair of nonwoven fabric sheets S1, S2 is formed.

Note that, in a case where the laminated sheet L has a two-layer structure, for example, the continuous first nonwoven fabric sheet S1 that is fed from a raw fabric roll (not illustrated) is supplied to the stretching roll 40 of the layering and bonding mechanism 48 via the guide roll 50. Then, in the layering and bonding mechanism 48, the layered body B in which the film F conveyed along the stretching roll 40 is layered with the first nonwoven fabric sheet S1 conveyed to the stretching roll 40 is formed.

### <Function of Layering and Bonding Mechanism 48 as Welding Apparatus>

The layering and bonding mechanism 48 welds the layered body B moving with the rotation of the stretching roll 40 and passing between the stretching roll 40 (as an example of a first member in the claims) functioning as the anvil roll and the horn 43 (as an example of a second member in the claims) of the ultrasonic bonding apparatus 42. Note that when the layering and bonding mechanism 48 welds the layered body B, stretchability need not reach a stable state for some resin of the resins of the film F. For example, in a case where the raw material of the film F is a mixture of a styrene-based resin and an olefin-based resin, stretchability need not yet reach a stable state for the olefin-based resin. With such a configuration, it is not necessary to wait for the stretchability to reach a stable state for all the components of the raw material having been melted, and thus the laminated sheet L can be efficiently manufactured with relatively compact equipment, without lengthening the conveyance path of the film F for cooling or conveying the film F at a low speed for cooling.

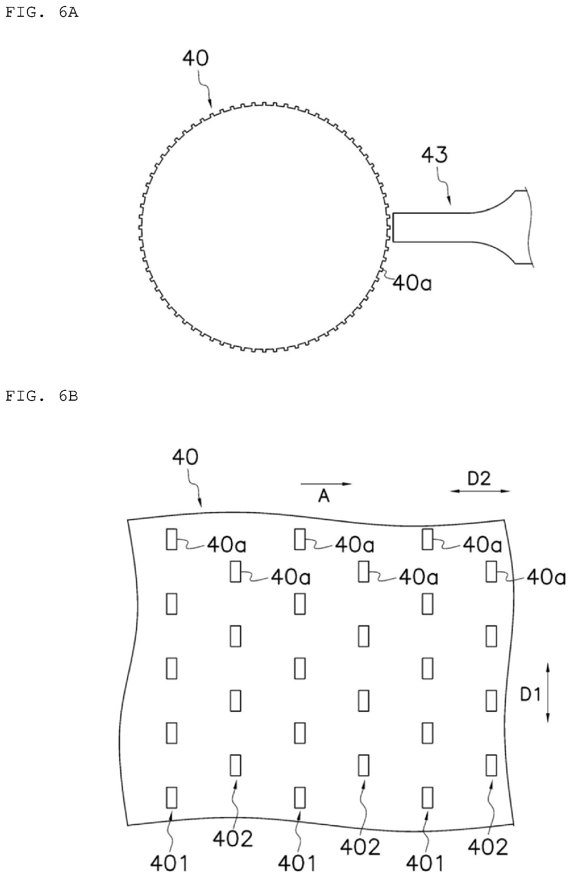

Specifically, a surface of the stretching roll 40 functioning as the anvil roll is provided with a plurality of protrusions 40a arranged along a rotation axis direction of the stretching roll 40 (a first direction D1 intersecting (here, particularly, orthogonal to) the conveyance direction A of the film F and the nonwoven fabric sheets S1, S2 (a circumferential direction)) and arranged along the circumferential direction of the stretching roll 40 (see Figs. 6A and 6B). The horn 43 is configured to be caused to ultrasonically vibrate by an ultrasonic oscillator (not illustrated). The layering and bonding mechanism 48 causes the horn 43 to vibrate by using the ultrasonic oscillator in a state where the film F and the nonwoven fabric sheets S1, S2 (layered body B) are sandwiched between the horn 43 and the protrusion 40a of the stretching roll 40, to ultrasonically weld the nonwoven fabric sheets S1, S2 and the film F having been layered and being conveyed. By ultrasonically welding the nonwoven fabric sheets S1, S2 and the film F, the laminated sheet L in which the pair of nonwoven fabric sheets S1, S2 and the film F are intermittently bonded at the welded portions J is formed.

More specifically, the layering and bonding mechanism 48 welds the film F and the nonwoven fabric sheets S1, S2 at the plurality of welded portions J arranged along the first direction D1 intersecting (here, particularly, orthogonal to) the conveyance direction A of the film F and the nonwoven fabric sheets S1, S2 (the conveyance direction A of the layered body B). Each of the welded portions J has a rectangular shape whose longitudinal direction is the first direction D1 intersecting (here, particularly, orthogonal to) the conveyance direction A of the film F and the nonwoven fabric sheets S1, S2 (the conveyance direction A of the layered body B), though the shape of the welded portion J is not limited thereto. In other words, each of the protrusions 40a of the stretching roll 40 has a rectangular shape whose longitudinal direction is the rotation axis direction of the stretching roll 40, when each of the protrusions 40a is viewed in a radial direction toward the rotation center of the stretching roll 40.

Note that first protrusion groups 401 and second protrusion groups 402 are preferably provided on the surface of the stretching roll 40 of the layering and bonding mechanism 48. Each of the first protrusion group 401 and the second protrusion group 402 includes a plurality of the protrusions 40a arranged at equal intervals along the first direction D1 (here, the rotation axis direction of the stretching roll 40). The first protrusion group 401 and the second protrusion group 402 are arranged on the surface of the stretching roll 40 to be shifted in the circumferential direction. In particular, here, the first protrusion groups 401 and the second protrusion groups 402 are alternately arranged in the circumferential direction, on the surface of the stretching roll 40 (see Fig. 6B). Note that, as illustrated in Fig. 6B, in the first protrusion group 401 and the second protrusion group 402, the respective protrusions 40a are arranged at different positions in the first direction D1. For example, in the first direction D1, the adjacent protrusions 40a of the second protrusion group 402 are arranged between the adjacent protrusions 40a of the first protrusion group 401, and the adjacent protrusions 40a of the first protrusion group 401 are arranged between the adjacent protrusions 40a of the second protrusion group 402.

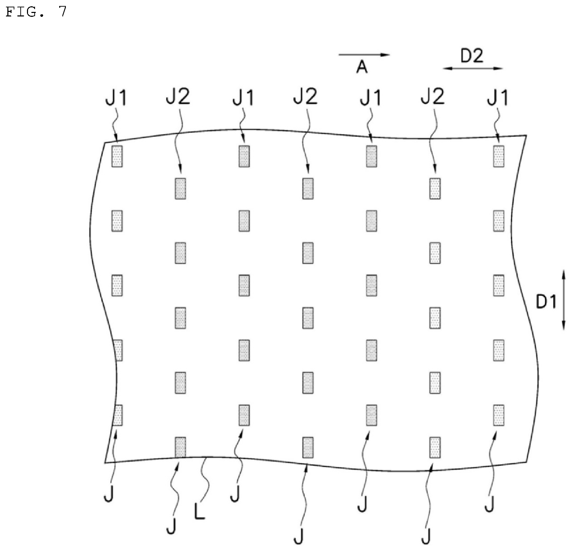

The first protrusion group 401 as an example of a first portion in the claims forms, in the film F and the nonwoven fabric sheets S1, S2 (that is, in the laminated sheet L formed by integrating the film F and the nonwoven fabric sheets S1, S2 by welding), a first welded portion group J1 including a plurality of the welded portions J arranged at predetermined intervals along the first direction D1 (see Fig. 7). In addition, the second protrusion group 402 as an example of a second portion in the claims forms, in the film F and the nonwoven fabric sheets S1, S2, a second welded portion group J2 including a plurality of the welded portions J arranged at predetermined intervals along the first direction D1, at a position shifted from the first welded portion group J1 in a second direction D2 (here, the conveyance direction A of the film F and the nonwoven fabric sheets S1, S2) orthogonal to the first direction D1 (see Fig. 7). Note that in the first protrusion group 401 and the second protrusion group 402, the respective protrusions 40a are arranged at different positions in the first direction D1, and thus, in the second welded portion group J2, the welded portions J are arranged at positions different from the positions of the welded portions J of the first welded portion group J1, in the first direction D1 (see Fig. 7).

In particular, the first protrusion groups 401 and the second protrusion groups 402 are alternately arranged on the surface of the stretching roll 40, in the example illustrated in Fig. 6, and thus the first welded portion groups J1 and the second welded portion groups J2 are alternately arranged in the laminated sheet L, in the second direction D2 (conveyance direction A). Further, in the present embodiment, in the first protrusion group 401 and the second protrusion group 402, the protrusions 40a are arranged at equal intervals in the first direction D1, and in the first direction D1, the adjacent protrusions 40a of the second protrusion group 402 are arranged between the adjacent protrusions 40a of the first protrusion group 401, and the adjacent protrusions 40a of the first protrusion group 401 are arranged between the adjacent protrusions 40a of the second protrusion group 402. As a result, the welded portions J are arranged in a staggered manner in the laminated sheet L as illustrated in Fig. 7.

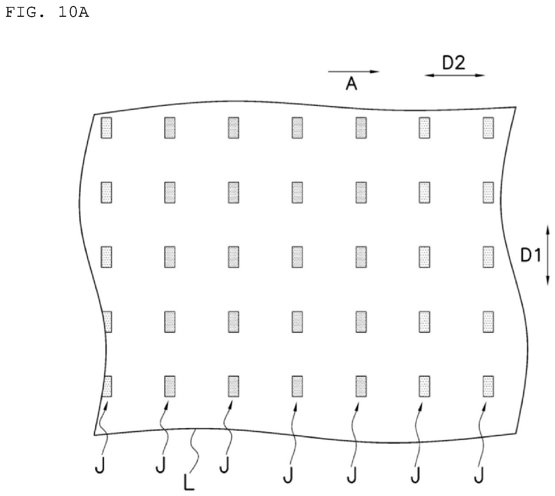

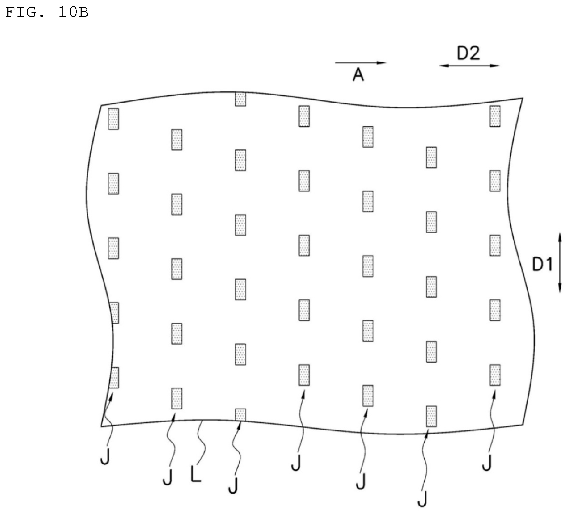

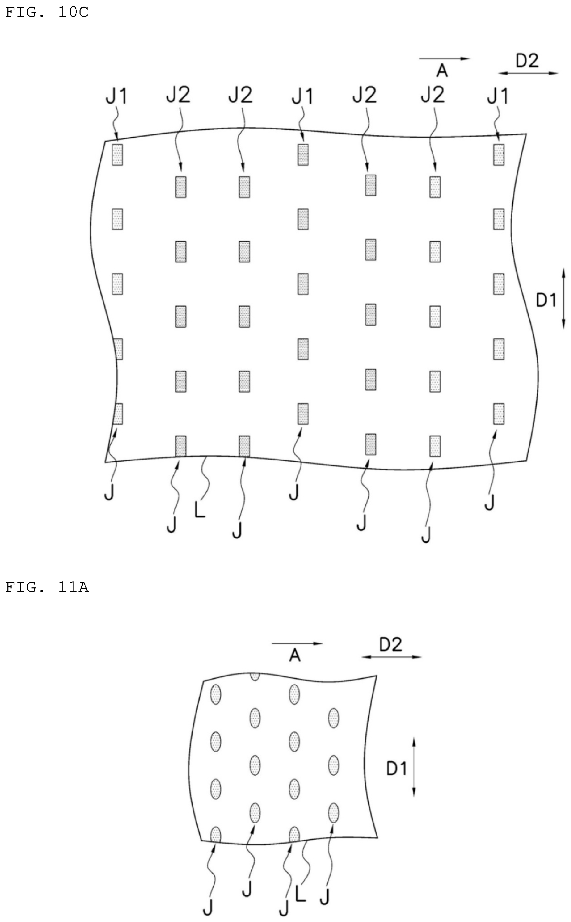

Note that the arrangement of the protrusions 40a in the stretching roll 40 is not limited to the mode illustrated in Fig. 6B. For example, instead of alternately arranging the first protrusion groups 401 and the second protrusion groups 402 on the stretching roll 40, only groups of the protrusions 40a each corresponding to the first protrusion group 401 (or the second protrusion group 402) in Fig. 6B may be arranged side by side in the circumferential direction. In this case, as illustrated in Fig. 10A, rows of the welded portions J in which the respective welded portions J of the rows are arranged at the same positions in the first direction D1 are formed in the laminated sheet L in a state of being arranged along the second direction D2 (conveyance direction A). In addition, for example, on the stretching roll 40, three or more protrusion groups (groups of the protrusions 40a in which the respective protrusions 40a are arranged at different positions in the first direction D1) may be sequentially arranged side by side in the circumferential direction. For example, in a case where there are three protrusion groups, the welded portions J are formed in the laminated sheet L in an arrangement as illustrated in Fig. 10B, for example. In addition, for example, on the stretching roll 40, the first protrusion groups 401 and the second protrusion groups 402 need not be alternately arranged in the circumferential direction, and the protrusion groups 401, 402 may be arranged in such an arrangement that two second protrusion groups 402 are provided in the circumferential direction following provision of one first protrusion group 401. For example, in a case where the protrusion groups 401, 402 exist in this manner, the welded portions J are formed in the laminated sheet L in an arrangement as illustrated in Fig. 10C.

In this manner, by changing the arrangement of the welded portions J, the manufacturing system 100 can easily manufacture the laminated sheets L having respective different elongations in accordance with applications or the like. In addition, by changing not only the arrangement of the welded portions J but also density for forming the welded portions J, the laminated sheets L having respective different elongations can be easily manufactured in accordance with applications or the like.

Note that, here, as an example, a case has been described in which the layering and bonding mechanism 48 as an example of the welding apparatus ultrasonically welds the nonwoven fabric sheets S1, S2 and the film F, but the mode of welding is not limited to ultrasonic welding. For example, the layering and bonding mechanism 48 may be configured to heat seal the nonwoven fabric sheets S1, S2 and the film F by sandwiching the layered body B between two rollers with heaters mounted therein.

### (3-5) Laminated Sheet Stretching Mechanism

The laminated sheet stretching mechanism 60 is an example of a stretching apparatus in the claims. The laminated sheet stretching mechanism 60 performs stretching (gear stretching) on the laminated sheet L by using the gear rolls 62, 64 to increase the stretchability and the air permeability of the laminated sheet L.

Specifically, the laminated sheet stretching mechanism 60 includes the pair of gear rolls 62, 64 including depressions and protrusions on respective peripheral surfaces thereof. More specifically, in the gear roll 62, a plurality of tooth portions 62a and a plurality of valley portions 62b are alternately provided along the circumferential direction of the gear roll 62, like a spur gear. Also in the gear roll 64, a plurality of tooth portions 64a and a plurality of valley portions 64b are alternately provided along the circumferential direction of the gear roll 64, like a spur gear. Moreover, when the gear roll 62 and the gear roll 64 are rotated by a drive mechanism such as a motor (not illustrated), the tooth portions 62a of the gear roll 62 and the valley portions 64b of the gear roll 64 mesh with each other, and the valley portions 62b of the gear roll 62 and the tooth portions 64a of the gear roll 64 mesh with each other. The laminated sheet L conveyed from the layering and bonding mechanism 48 along the conveyance direction A is supplied to the meshing portions between the gear roll 62 and the gear roll 64, and is stretched.

Then, the laminated sheet stretching mechanism 60 stretches the laminated sheet L (that is, the film F and the nonwoven fabric sheets S1, S2, integrated by welding and being conveyed) by the laminated sheet stretching mechanism 60, to form openings Op in the welded portions J and/or around the welded portions J of the film F and the nonwoven fabric sheets S1, S2, and/or to widen the openings Op.

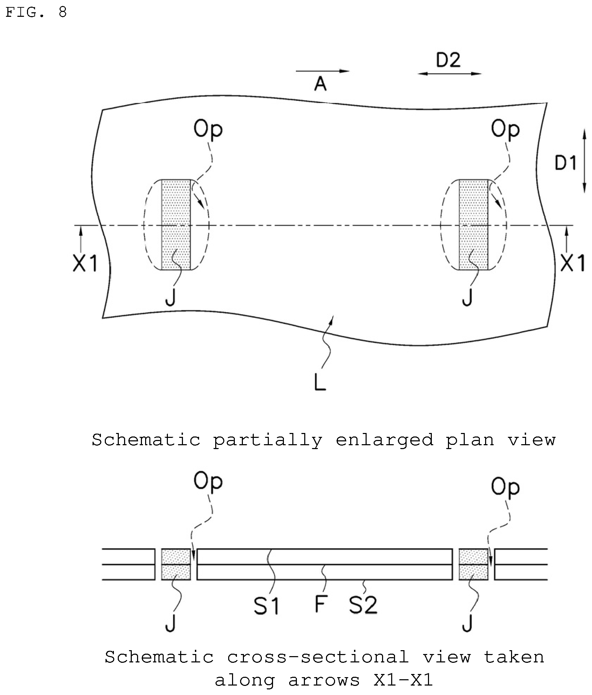

Specifically, when the laminated sheet L is stretched in the conveyance direction A before being stretched by the laminated sheet stretching mechanism 60, the opening Op is formed in the welded portion J (dotted portion) of the laminated sheet L or therearound by action of heat as illustrated in Fig. 8. Note that Fig. 8 is a schematic view, and thus does not limit the shape, size, position, and the like of the actual opening Op. When the openings Op are formed in the laminated sheet L, the nonwoven fabric sheets S1, S2 are easily deformed (as compared with the case in which there is no opening Op), and thus the stretchability of the laminated sheet L is improved. In particular, in a case where the welded portions J are arranged in a staggered manner as illustrated in Fig. 8, the stretchability of the laminated sheet L is easily improved. In addition, when the openings Op are formed in the laminated sheet L, the air permeability of the laminated sheet L is improved (as compared with the case in which there is no opening Op).

However, such an opening Op is relatively small, and thus there is a possibility that the opening Op having a sufficient area for securing the air permeability and the stretchability of the laminated sheet L is not provided.

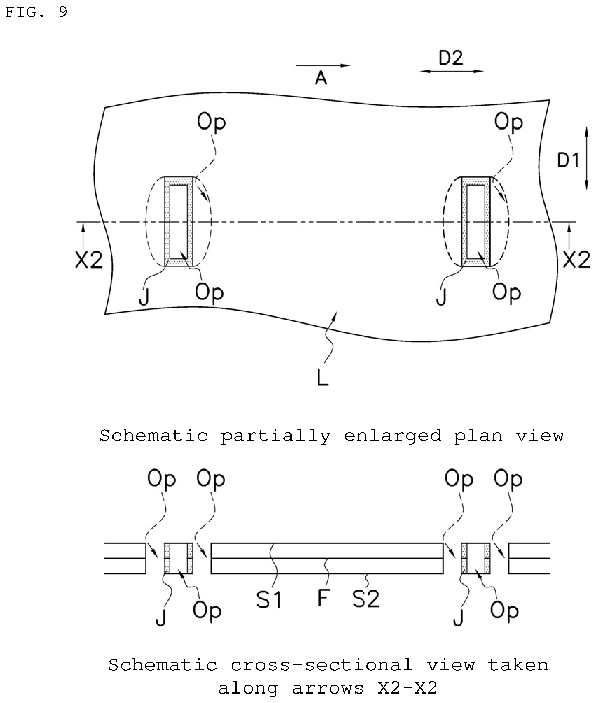

On the other hand, by performing stretching with the laminated sheet stretching mechanism 60, for example, the film F is cut at portions of the welded portions J of the laminated sheet L, or at places different from the openings Op, around the welded portions J. For example, in the example of Fig. 9, the film F is cut at the welded portion J of the laminated sheet L by stretching, and the opening Op is formed. In addition, in the example of Fig. 9, as a result of applying a force to the already existing opening Op, the width of the opening Op is widened. Note that Fig. 9 is a schematic view, and thus does not limit the shape, size, position, and the like of the actual opening Op.

In this manner, the laminated sheet stretching mechanism 60 stretches the laminated sheet L, whereby the opening that is relatively large is formed in the laminated sheet L, as illustrated in Fig. 9. As a result, the air permeability and the stretchability of the laminated sheet L are improved.

Note that, here, as an example, a case is described in which the laminated sheet stretching mechanism 60 stretches the laminated sheet L in the conveyance direction A. In this case, stretchability particularly along the conveyance direction A is imparted to the laminated sheet L, and the laminated sheet L easily stretches and contracts along the conveyance direction A. In particular, here, since the welded portions J whose longitudinal direction is the first direction D1 orthogonal to the conveyance direction A of the laminated sheet L are provided in the laminated sheet L, high stretchability along the conveyance direction A is easily imparted to the laminated sheet L by stretching the laminated sheet L in the conveyance direction A through the laminated sheet stretching mechanism 60. Note that in Fig. 7, each of the welded portions J has a rectangular shape whose longitudinal direction is the first direction D1, but the shape of the welded portion J is not limited to a rectangular shape. For example, as illustrated in Fig. 11A, each of the welded portions J may have an elliptical shape whose longitudinal direction is the first direction D1.

Note that a laminated sheet stretching mechanism 60' may be an apparatus that includes a pair of rollers 62', 64' as described below, and that stretches the laminated sheet L in a direction (first direction D1) orthogonal to the conveyance direction A.

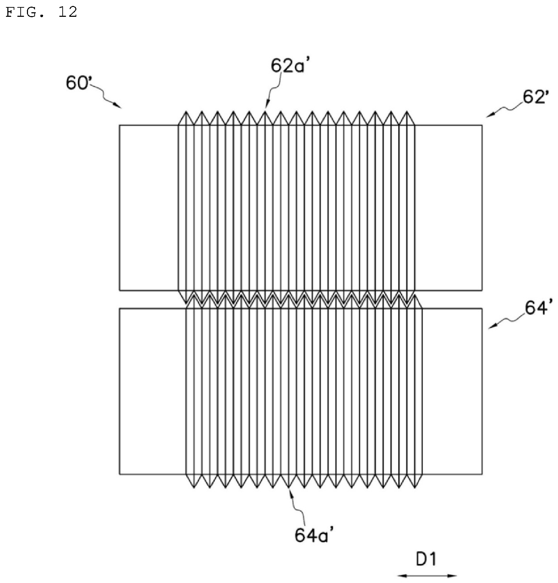

The pair of rollers 62', 64' extend orthogonal to the conveyance direction A of the laminated sheet L. As illustrated in Fig. 12, the roller 62' that is one of the pair of rollers is provided with a plurality of tooth portions 62a' continuous in the circumferential direction, along a rotation axis of the roller 62'. In addition, the roller 64' that is the other one of the pair of rollers is provided with a plurality of tooth portions 64a' continuous in the circumferential direction, along a rotation axis of the roller 64'. Note that the tooth portions 62a' and the tooth portion 64a' are arranged such that the tooth portions 62a' pass through gaps between the tooth portions 64a' and the tooth portions 64a' pass through gaps between the tooth portions 62a'. When the laminated sheet L is sandwiched between such rollers 62', 64' and is conveyed in the conveyance direction A, the laminated sheet L is stretched in the direction (first direction D1) orthogonal to the conveyance direction A.

Note that, although not illustrated, in a case where the laminated sheet L is stretched in the direction (first direction D1) orthogonal to the conveyance direction A, each of the welded portions J may have a shape whose longitudinal direction is the conveyance direction A, orthogonal to the first direction D1. By selecting such a shape for the welded portion J, high stretchability along the first direction D1 is easily imparted to the laminated sheet L.

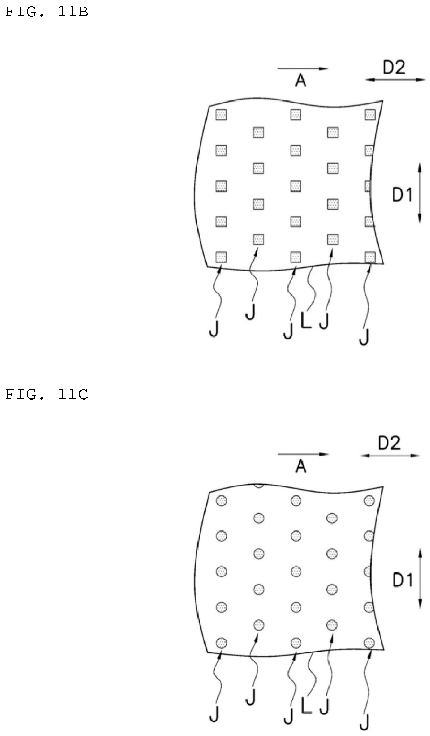

Further, the shape of each of the welded portions J may be a square shape having sides extending in the conveyance direction A and sides extending in the first direction D1, or a circular shape (see Figs. 11B and 11C). For example, in a case where each of the square shape and the circular shape for the welded portions J is adopted and the laminated sheet L is stretched by using each of the laminated sheet stretching mechanism 60 and the laminated sheet stretching mechanism 60', the laminated sheet L having high stretchability in both the conveyance direction A and the first direction D1 can be obtained.

### (3-6) Controller

The controller 90 includes a CPU, memories such as a ROM and a RAM, an input/output device, various electric components and electronic components, and the like (illustration of these is omitted).

As illustrated in Fig. 5, the controller 90 is electrically connected to the discharge mechanism 20, the cooling roll 30, the film stretching mechanism 38, the layering and bonding mechanism 48, and the laminated sheet stretching mechanism 60. The controller 90 controls the discharge mechanism 20, the cooling roll 30, the film stretching mechanism 38, the layering and bonding mechanism 48, and the laminated sheet stretching mechanism 60 to operate in cooperation with one another by causing the CPU to execute a program stored in the memory.

Note that the controller 90 may be implemented by software, may be implemented by hardware (various electric circuits/electronic circuits), or may be implemented by cooperation of software and hardware, as long as the function as described here can be exerted.

### (4) Method for Manufacturing Laminated Sheet

The method for manufacturing the laminated sheet L will now be described with reference to Fig. 5.

In the discharge mechanism 20, the film F is formed. Specifically, in the discharge mechanism 20, a resin material exhibiting elasticity at room temperature as a raw material is heated and melted, and the film F is formed by extruding the resin material through the discharge outlet 24 (step P1).

The extruded film F is fed to the cooling roll 30. In the cooling roll 30, the film F is cooled to the first temperature (step P2). For example, in a case where the raw material is a mixture of a styrene-based resin and an olefin-based resin, the film F is cooled to the first temperature at which the stretchability of the olefin-based resin does not reach a stable state and the stretchability of the styrene-based resin reaches a stable state.

The film F drawn out from the cooling roll 30 is fed to the film stretching mechanism 38, and is stretched to be subjected to reduction in the thickness (step P3). Note that the elongation of the film F in the film stretching mechanism 38 is determined, for example, in accordance with components of resins forming the raw material. For example, in a case where the raw material is a mixture of a styrene-based resin and an olefin-based resin, the elongation is set higher as the blending ratio of the olefin-based resin is higher.

The film F stretched by the film stretching mechanism 38 is fed to the layering and bonding mechanism 48, and is layered with the nonwoven fabric sheets S1, S2 (step P4). In particular, in the present embodiment, the film F and the nonwoven fabric sheets S1, S2 are layered between the pair of nonwoven fabric sheets S1, S2 (the layered body B is formed).

Note that in the layering, the first nonwoven fabric sheet S1 and the second nonwoven fabric sheet S2 each being in a state of natural length (including a case of substantially natural length) and the film F having elasticity and being in a state of natural length (including a case of substantially natural length) are layered. Alternatively, the first nonwoven fabric sheet S1 and the second nonwoven fabric sheet S2 each being in a state of natural length (including a case of substantially natural length) and being stretched in the conveyance direction A, and the film F having elasticity, being conveyed, and being stretched in the conveyance direction A and being at an elongation of 15% or less may be layered.

Further, in the layering and bonding mechanism 48, the film F and the nonwoven fabric sheets S1, S2 having been layered and being conveyed (that is, the layered body B being conveyed) are sandwiched between the stretching roll 40 and the horn 43 of the ultrasonic bonding apparatus 42, and the pair of nonwoven fabric sheets S1, S2 and the film F in the layered state are welded to form the laminated sheet L.

The film F and the nonwoven fabric sheets S1, S2 (that is, the laminated sheet L), integrated by welding and being conveyed are fed to the laminated sheet stretching mechanism 60, and are stretched (step P6). As a result, the openings Op are formed in the welded portions J and/or around the welded portions J of the film F and the nonwoven fabric sheets S1, S2. In addition, as a result of stretching the laminated sheet L, the openings Op formed in the welded portions J or therearound at the time of welding are widened. As a result, the stretchability and the air permeability of the laminated sheet L are improved.

Note that, as described above, the laminated sheet L may be stretched in the conveyance direction A, may be stretched in the first direction D1 orthogonal to the conveyance direction A, or may be stretched in both the conveyance direction A and the first direction D1.

Note that the method for manufacturing the laminated sheet L described here is merely an example, and may be appropriately changed as mentioned in the description of the manufacturing system 100. For example, the extension step of step P3 may be omitted. In addition, the stretching step of step P6 may also be omitted.

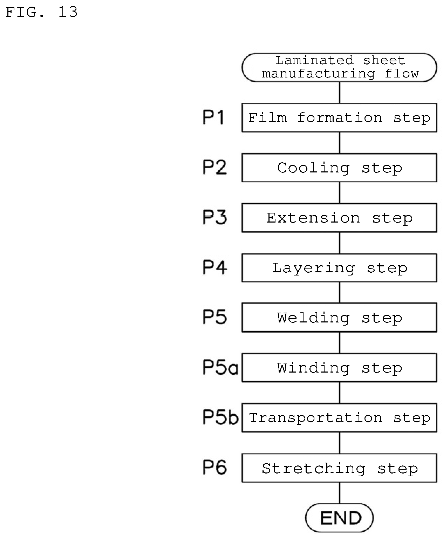

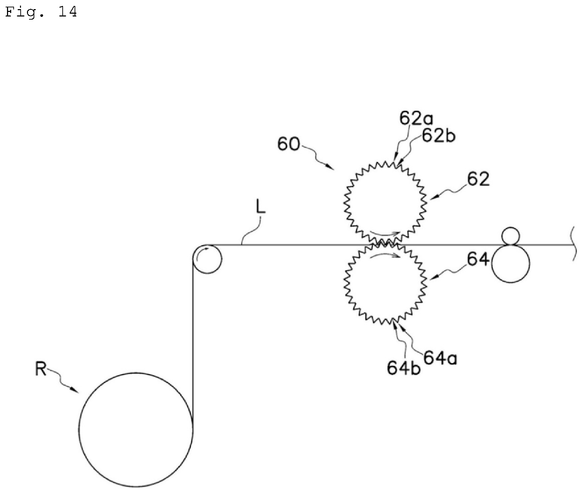

Further, for example, instead of directly feeding the manufactured laminated sheet L to a manufacturing line for a wearing article, as illustrated in Fig. 13, at a time when the laminated sheet L is formed in step P5, the laminated sheet L may be provisionally wound around a core (not illustrated) (step P5a), and a roll R of the wound laminated sheet L may be formed. Then, the laminated sheet L may be transported to a factory where the laminated sheet L will be used, in the form of the roll R of the wound laminated sheet L (step P5b). Alternatively, although not illustrated, the roll R of the wound laminated sheet L may be temporarily stored in a warehouse or the like (instead of being transported to another place). Then, at the time of actual use, the laminated sheet L may be unwound from the roll R, and may be stretched by using an apparatus such as the laminated sheet stretching mechanism 60, 60' (step P6), and the laminated sheet L whose stretchability has been thus activated may be used for manufacturing a wearing article (see Fig. 14).

Merits will be described in using, for manufacturing a wearing article, the laminated sheet L obtained by provisionally winding, into the roll R, the laminated sheet L manufactured by the manufacturing apparatus and manufacturing method as described above in steps P1 to P5, after step P5, and then by unwinding the laminated sheet L from the roll R (after a period of time has passed) and stretching the laminated sheet L using an apparatus such as the laminated sheet stretching mechanism 60, 60' to cause the stretchability of the laminated sheet L to be activated, in this manner.

In the manufacturing of a wearing article, not all steps related to the manufacturing of the wearing article may be continuously performed, and, for example, the laminated sheet L manufactured in another place or by another company may be used.

At this time, the manufactured laminated sheet L is packed, transported, and stored, and in consideration of stability of the packing operation, productivity, ease of handling of the package, transportation efficiency of the package, storability of the package, and the like, it is preferable to adopt roll packing in which the laminated sheet L is packed in a roll form by being wound around a core.

However, if a roll is formed by, after the laminated sheet L is stretched by using an apparatus such as the laminated sheet stretching mechanism 60, 60', winding the laminated sheet L around a core in a state where tension is applied to the laminated sheet L (hereinafter, in order to simplify the description, the laminated sheet L after being stretched by using an apparatus such as the laminated sheet stretching mechanism 60, 60' is referred to as a stretched laminated sheet), and this roll is stored for a long period of time, the laminated sheet L may be fully stretched and be unusable as the laminated sheet L.

Therefore, it is conceivable to adopt a packing method of packing the stretched laminated sheet using an approach of folding the laminated sheet L into a layered state (without applying tension), when the stretched laminated sheet is packed, transported, and stored. However, the package of the stretched laminated sheet obtained using this approach is inferior in terms of ease of handling, and is inferior in terms of transportation efficiency and storability due to its bulkiness.

As another packing method of the stretched laminated sheet, it is also conceivable to adopt a packing approach of forming a roll by winding the stretched laminated sheet around a core while applying weak tension to such an extent that the stretched laminated sheet is not fully stretched. However, in such a package of the loosely wound stretched laminated sheet, the stretched laminated sheet is likely to be displaced, and the length of a stretchable member that can be packed per roll is reduced, and thus there is a problem that the roll replacement frequency increases and this leads to a work load on the manufacturing work of the wearing article.

However, as described above, in a case where the roll R is formed by provisionally winding, around the core, the laminated sheet L before being stretched by an apparatus such as the laminated sheet stretching mechanism 60, 60' and then the laminated sheet L is unwound from the roll R, the stretchability of the laminated sheet L is activated at the time when the laminated sheet L is stretched by the laminated sheet stretching mechanism 60, 60'. Therefore, even when the laminated sheet L is wound around the core in a state where tension is applied to the laminated sheet L to some extent, the laminated sheet L having stretchability can be used for the wearing article.

Further in the present invention, since the laminated sheet L in which an amount of nonwoven fabric used per unit area is small can be manufactured by manufacturing the laminated sheet using the manufacturing apparatus and manufacturing method as described above, the thickness of the laminated sheet L is less likely to increase. Thus, in a case where the sheet is assumed to be wound such that the outer diameter is the same with respect to the core, when the laminated sheet L is used, the length of the laminated sheet that can be packed per roll becomes longer, as compared with the case of using the laminated sheet in which the amount of nonwoven fabric used is large. Therefore, in the laminated sheet L of the present embodiment, effects can also be obtained, such as improvement in ease of transportation and storability when the roll R is formed, and reduction in replacement frequency of the roll R at the time of manufacturing the wearing article.

Further, the present inventor has found that the stretchability of the laminated sheet L can also be improved by stretching the laminated sheet L through the laminated sheet stretching mechanism 60, 60' after a certain period of time (the laminated sheet L is provisionally wound around the core to form the roll R, and is transported or stored in that state), instead of stretching the laminated sheet L through the laminated sheet stretching mechanism 60, 60' immediately after the welding step of step P5.

Specifically, as described above, in a case where the mixture of a styrene-based resin and an olefin-based resin is used for the resin material, there is a possibility that the stretchability of the olefin-based resin is not completely stable at the timing immediately after the welding step of step P5. When the laminated sheet L is stretched by the laminated sheet stretching mechanism 60, 60' in this state, the film F forming the laminated sheet L is partially plastically deformed, and such a plastically deformed part does not contribute to the elasticity of the laminated sheet L.

On the other hand, in a case where the laminated sheet L is provisionally wound around the core to form the roll R after step P5, and is stretched by the laminated sheet stretching mechanism 60, 60' after a certain period of time has passed, the stretchability of the olefin-based resin also reaches a stable state, and thus the film F forming the laminated sheet L is less likely to be plastically deformed, and the resulting laminated sheet L has high elasticity.

### (5) Characteristics

(5-1)
The method for manufacturing the laminated sheet L for a wearing article includes a film formation step P1, a cooling step P2, a layering step P4, and a welding step P5. In the film formation step P1, the film F is formed by extruding a raw material having been melted. In the cooling step P2, the film F having been extruded is cooled. In the layering step P4, the nonwoven fabric sheets S1, S2 each being in a state of natural length and the film F having elasticity, being conveyed, and being in a state of natural length are layered. Alternatively, in the layering step P4, the nonwoven fabric sheets S1, S2 each being in a state of natural length and the film F having elasticity, being conveyed, and being stretched in the conveyance direction A and being at an elongation of 15% or less are layered. In the welding step P5, the film F and the nonwoven fabric sheets S1, S2 having been layered and being conveyed are welded to form the laminated sheet L.

In the method for manufacturing the laminated sheet L, the laminated sheet L having a lower basis weight (a low weight of each of the nonwoven fabric sheets S1, S2 per unit area) can be manufactured, as compared with a case in which the laminated sheet L is formed by laminating the film F in a greatly stretched state and the nonwoven fabric sheets S1, S2.

In addition, in the method for manufacturing the laminated sheet L, by welding the film F and the nonwoven fabric sheets S1, S2, the opening Op is formed in the welded portion J or therearound at the time of welding. The nonwoven fabric sheets S1, S2 are also easily deformed by forming the opening Op, and thus the laminated sheet L having a high elongation can be manufactured, in the method for manufacturing the laminated sheet L. Further, in this manufacturing method, since the opening Op is formed, the laminated sheet L having excellent air permeability can be manufactured.

(5-2)
The method for manufacturing the laminated sheet L of the present embodiment includes a stretching step P6 of stretching the film F and the nonwoven fabric sheets S1, S2, integrated by welding and being conveyed, to form the opening Op in the welded portion J and/or around the welded portion J of the film F and the nonwoven fabric sheets S1, S2, and/or to widen the opening Op.

By providing the stretching step P6, in particular, the laminated sheet L having a high elongation and excellent air permeability can be manufactured.

(5-3)
The method for manufacturing the laminated sheet L of the present embodiment includes an extension step P3 of stretching the film F to reduce the thickness of the film F, after the cooling step P2 and before the layering step P4.

By providing the extension step P3 to reduce the thickness of the film F forming the laminated sheet L, it is possible to manufacture the laminated sheet L that is easily deformed with a relatively small force and that is less likely to give a strong feeling of tightness to a wearer of the wearing article. In addition, the laminated sheet L having a low basis weight (here, a low weight of the film F per unit area) can be manufactured by thinning the film F forming the laminated sheet L.

(5-4)
In the method for manufacturing the laminated sheet L of the present embodiment, the raw material to be melted contains the first resin and the second resin having different conditions under each of which stretchability reaches stability. In the cooling step P2, the film F is cooled to the first temperature at which the stretchability of the second resin does not reach a stable state and the stretchability of the first resin reaches a stable state.

Note that the first resin is, for example, a styrene-based resin, and the second resin is, for example, an olefin-based resin, though the first resin and the second resin are not limited to a styrene-based resin and an olefin-based resin, respectively.

For example, in a case where a styrene-based resin and an olefin-based resin are used for the resin material, a weight ratio between the styrene-based resin and the olefin-based resin is 1 : 0.33 to 0.54, and the content of the styrene-based resin and the olefin-based resin in the entire raw material is 90% by weight or more.

In this method for manufacturing the laminated sheet L, the film F in which, instead of a raw material completely unstable in terms of stretchability, the stretchability of at least one component reaches a stable state, and the nonwoven fabric sheets S1, S2 can be layered and integrated. Meanwhile, it is not necessary to wait for the stretchability to reach a stable state for all the components of the raw material having been melted, and thus the laminated sheet L can be efficiently manufactured with relatively compact equipment, without lengthening the conveyance path of the film F for cooling or conveying the film F at a low speed for cooling.

Note that in the above embodiment, as an example, a case has been mainly described in which the raw material contains two types of resins, but the raw material may contain three or more types of resins. Further, in this case, in the cooling step P2, the film F may be cooled to a temperature at which the stretchability of at least one type of resin reaches a stable state and the stretchability of the other resins does not reach a stable state.

(5-5)
In the method for manufacturing the laminated sheet L of the present embodiment, the stretching ratio of the film F in the extension step P3 is preferably set in accordance with the blending ratio of the second resin whose stretchability does not reach a stable state in the cooling step P2, in a case where the resins to be used are two types of resins of the first resin and the second resin.

In the method for manufacturing the laminated sheet L, by changing the blending ratio of the second resin in accordance with an application or the like of the laminated sheet L, the stretching ratio of the film F, that is, the thickness of the film F to be formed can be appropriately adjusted.

Note that, in a case where the raw material contains three or more types of resins, the stretching ratio of the film in the extension step P3 is simply required to be set in accordance with the blending ratio of the resin that does not reach a stable state in the cooling step P2.

(5-6)
In the method for manufacturing the laminated sheet L of the present embodiment, in the welding step P5, the film F and the nonwoven fabric sheets S1, S2 are welded at the plurality of welded portions J.

For example, the plurality of welded portions J are arranged along the first direction D1 intersecting (here, particularly, orthogonal to) the conveyance direction A of the film F and the nonwoven fabric sheets S1, S2.

Each of the welded portions J has, for example, a shape whose longitudinal direction is the first direction D1 intersecting (here, particularly, orthogonal to) the conveyance direction A of the film F and the nonwoven fabric sheets S1, S2. In a case where such a configuration is made, the laminated sheet L having high stretchability in a direction orthogonal to the first direction D1 can be manufactured.

Alternatively, each of the welded portions J may have, for example, a shape whose longitudinal direction is the second direction D2 (in particular, in the present embodiment, the conveyance direction A of the laminated sheet L) orthogonal to the first direction D1. In a case where such a configuration is made, the laminated sheet L having high stretchability in the first direction D1 can be manufactured.

Alternatively, each of the welded portions J may have a square shape or a circular shape. In a case where such a configuration is made, the laminated sheet L having high stretchability in the first direction D1 in addition to the direction orthogonal to the first direction D1 can be manufactured.

In this manner, by appropriately selecting the shape of the welded portion J, the stretchability of the laminated sheet L in a desired direction can be increased.

(5-7)
In the method for manufacturing the laminated sheet L of the present embodiment, a plurality of the welded portions J arranged at predetermined intervals along the first direction D1 intersecting (here, particularly, orthogonal to) the conveyance direction A of the film F and the nonwoven fabric sheets S1, S2 form one welded portion group. The welded portion group includes the first welded portion group J1, and the second welded portion group J2 arranged at a position shifted from the first welded portion group J1 in the second direction D2 (particularly, the conveyance direction A, in the embodiment described above) orthogonal to the first direction D1. In the second welded portion group J2, the welded portions J are arranged at positions different from the positions of the welded portions J of the first welded portion group J1, in the first direction D1.

In this method for manufacturing the laminated sheet L, by providing the first welded portion group J1 and the second welded portion group J2, it is possible to manufacture the laminated sheet L having high stretchability, as compared with a case in which the welded portions J are arranged in the second direction D2 without changing the positions of the welded portions J.

Note that, preferably, the first welded portion group J1 and the second welded portion group J2 are alternately arranged in the second direction D2, and the welded portions J are arranged in a staggered manner in the laminated sheet L.

By arranging the welded portions J in a staggered manner, the laminated sheet L having high stretchability can be manufactured.

(5-8)
In the stretching step P6, the laminated sheet L is stretched in the conveyance direction A, in order to manufacture the laminated sheet L having high stretchability in the conveyance direction A.

Alternatively, in the stretching step P6, the laminated sheet L may be stretched in the direction (the first direction D1, in the embodiment described above) orthogonal to the conveyance direction A, in order to manufacture the laminated sheet L having high stretchability in the direction orthogonal to the conveyance direction A.

(5-9)
The method for manufacturing the laminated sheet L of the present embodiment may include a winding step of winding the laminated sheet L to form the roll R of the wound laminated sheet L, after the welding step P5 and before the stretching step P6. In the stretching step P6, the film F and the nonwoven fabric sheets S1, S2 of the laminated sheet L fed from the roll R and being conveyed are stretched.

With such an arrangement, as described above, even in a case where the laminated sheet L is wound around a core to form the roll R in a state where tension is applied to the laminated sheet L to some extent, and the roll R is transported or stored, the laminated sheet L having high stretchability can be manufactured by activating the laminated sheet L in the stretching step P6.

In addition, with such an arrangement, as described above, for example, in a case where a mixture of a styrene-based resin and an olefin-based resin is used for the resin material (the raw material of the film), plastic deformation of the olefin-based resin in the stretching step can be reduced, and the laminated sheet L having high elasticity can be manufactured.

(5-10)
The system 100 for manufacturing the laminated sheet L for a wearing article includes the discharge mechanism 20 as an example of the film formation apparatus, the cooling roll 30 as an example of the cooling apparatus, and the layering and bonding mechanism 48 as an example of the layering apparatus and the welding apparatus. The discharge mechanism 20 forms the film F by extruding a raw material having been melted. The cooling roll 30 cools the extruded film F. The layering and bonding mechanism 48 layers the nonwoven fabric sheets S1, S2 each being in a state of natural length and the film F having elasticity, being conveyed, and being in a state of natural length. Alternatively, the layering and bonding mechanism 48 layers the nonwoven fabric sheets S1, S2 each being in a state of natural length and the film F having elasticity, being conveyed, and being stretched in the conveyance direction A and being at an elongation of 15% or less. The layering and bonding mechanism 48 welds the films F and the nonwoven fabric sheets S1, S2 having been layered and being conveyed, to form the laminated sheet L.

In this manufacturing system 100, the laminated sheet L having a low basis weight (a low weight of each of the nonwoven fabric sheets S1, S2 per unit area) can be manufactured. In addition, in this manufacturing system 100, the laminated sheet L having a high elongation and excellent air permeability can be manufactured.

(5-11)
The system 100 for manufacturing the laminated sheet L includes the film stretching mechanism 38 as an example of the extension apparatus that stretches the film F to reduce the thickness of the film F, after the film F has been cooled by the cooling roll 30 (and before the film F and the nonwoven fabric sheets S1, S2 are layered).

In this manufacturing system 100, the laminated sheet L having a low basis weight (here, a low weight of the film F per unit area) can be manufactured.

(5-12)
In the system 100 for manufacturing the laminated sheet L, the layering and bonding mechanism 48 welds the film F and the nonwoven fabric sheets S1, S2 at the plurality of welded portions J arranged along the first direction D1 intersecting (in the present embodiment, orthogonal to) the conveyance direction A of the film F and the nonwoven fabric sheets S1, S2 by sandwiching the film F and the nonwoven fabric sheets S1, S2 between the stretching roll 40 (anvil roll) as an example of the first member and the horn 43 as an example of the second member. The stretching roll 40 includes the first protrusion group 401 that is an example of the first portion and the second protrusion group 402 that is an example of the second portion. The first protrusion group 401 forms, in the film F and the nonwoven fabric sheets S1, S2, the first welded portion group J1 including a plurality of the welded portions J arranged at predetermined intervals along the first direction D1. The second protrusion group 402 forms, in the film F and the nonwoven fabric sheets S1, S2, the second welded portion group J2 including a plurality of the welded portions J arranged at predetermined intervals along the first direction D1, at a position shifted from the first welded portion group J1 in the second direction D2 (here, the conveyance direction A) orthogonal to the first direction D1. In the second welded portion group J2, the welded portions J are arranged at positions different from the positions of the welded portions J of the first welded portion group J1, in the first direction D1.

In this manufacturing system 100, the laminated sheet L having high stretchability can be manufactured.

(5-13)
The system 100 for manufacturing the laminated sheet L includes the laminated sheet stretching mechanism 60 as an example of the stretching apparatus. The laminated sheet stretching mechanism 60 stretches, in the conveyance direction A of the film F and the nonwoven fabric sheets S1, S2 or in the direction orthogonal to the conveyance direction A, the film F and the nonwoven fabric sheets S1, S2 (the laminated sheet L), integrated by welding and being conveyed, to form the opening Op in the welded portion J and/or around the welded portion J of the film F and the nonwoven fabric sheets S1, S2, and/or to widen the opening Op.

In this manufacturing system 100, in particular, the laminated sheet L having a high elongation and excellent air permeability can be manufactured.

(5-14)
   In the laminated sheet L for a wearing article, the film F having elasticity and the nonwoven fabric sheets S1, S2 are laminated. The film F and the nonwoven fabric sheets S1, S2 are integrated by welding. When each of the nonwoven fabric sheets S1, S2 is at a natural length, tension does not act on the film F.
(5-15)
   In the laminated sheet L, welding is performed at the plurality of welded portions J arranged along the first direction (here, the first direction D1 during the manufacturing of the laminated sheet L). The plurality of welded portions J arranged at predetermined intervals along the first direction D1 form one welded portion group. The welded portion group includes the first welded portion group J1, and the second welded portion group J2 arranged at a position shifted from the first welded portion group J1 in the second direction D2 orthogonal to the first direction D1. In the second welded portion group J2, the welded portions J are arranged at positions different from the positions of the welded portions J of the first welded portion group J1, in the first direction D1.
(5-16)
   In the laminated sheet L, the film F and the nonwoven fabric sheets S1, S2 are welded at the plurality of welded portions J arranged along the first direction D1. Each of the welded portions J has a shape whose longitudinal direction is the first direction D1. Alternatively, each of the welded portions J has a square shape or a circular shape.

### <Additional Notes>

Finally, technical ideas that can be grasped from the embodiment described above will be additionally described below.

A method for manufacturing a laminated sheet for a wearing article according to a first aspect includes a film formation step, a cooling step, a layering step, and a welding step. In the film formation step, a film is formed by extruding a raw material having been melted. In the cooling step, the film having been extruded is cooled. In the layering step, a nonwoven fabric being in a state of natural length and the film having elasticity, being conveyed, and being in a state of natural length are layered. Alternatively, in the layering step, a nonwoven fabric being in a state of natural length and the film having elasticity, being conveyed, and being stretched in a conveyance direction and being at an elongation of 15% or less are layered. In the welding step, the film and the nonwoven fabric having been layered and being conveyed are welded to form a laminated sheet.

In the method for manufacturing a laminated sheet according to the first aspect, since the nonwoven fabric being in a state of natural length and the film being in a state of natural length or the film being at an elongation of 15% or less (being stretched merely 15% or less with respect to the natural length) are laminated, a laminated sheet having a low basis weight (a low weight of the nonwoven fabric per unit area) can be manufactured, as compared with a case in which a laminated sheet is formed by laminating the film in a greatly stretched state and the nonwoven fabric.

In addition, in the method for manufacturing a laminated sheet according to the first aspect, by welding the film and the nonwoven fabric, an opening is formed in a welded portion or therearound at the time of welding. The nonwoven fabric is also easily deformed by forming the opening, and thus a laminated sheet having a high elongation property can be manufactured, in this method for manufacturing a laminated sheet. Further, in this manufacturing method, since the opening is formed, a laminated sheet having excellent air permeability can be manufactured.

A method for manufacturing a laminated sheet according to a second aspect is the method for manufacturing a laminated sheet according to the first aspect, further including a stretching step of stretching the film and the nonwoven fabric, integrated by welding and being conveyed, to form an opening in a welded portion of the film and the nonwoven fabric and/or around the welded portion, and/or to widen the opening.

In the method for manufacturing a laminated sheet according to the second aspect, in particular, a laminated sheet having a high elongation and excellent air permeability can be manufactured.

A method for manufacturing a laminated sheet according to a third aspect is the method for manufacturing a laminated sheet according to the first or second aspect, further including an extension step of stretching the film to reduce a thickness of the film, after the cooling step and before the layering step.

In the method for manufacturing a laminated sheet according to the third aspect, by reducing the thickness of the film forming the laminated sheet, it is possible to manufacture a laminated sheet that is easily deformed with a relatively small force and that is less likely to give a strong feeling of tightness to a wearer of the wearing article. In addition, a laminated sheet having a low basis weight (here, a low weight of the film per unit area) can be manufactured by reducing the thickness of the film forming the laminated sheet.

A method for manufacturing a laminated sheet according to a fourth aspect is the method for manufacturing a laminated sheet according to any one of the first to third aspects, in which the raw material to be melted contains a first resin and a second resin having different conditions under each of which stretchability reaches stability. In the cooling step, the film is cooled to the first temperature at which stretchability of the second resin does not reach a stable state and stretchability of the first resin reaches a stable state.

In the method for manufacturing a laminated sheet according to the fourth aspect, the film in which the stretchability of at least one component reaches a stable state, and the nonwoven fabric can be layered and integrated. Meanwhile, it is not necessary to wait for the stretchability to reach a stable state for all the components of the raw material having been melted, and thus the laminated sheet can be efficiently manufactured with relatively compact equipment, without lengthening the conveyance path of the film for cooling or conveying the film at a low speed for cooling.

A method for manufacturing a laminated sheet according to a fifth aspect is the method for manufacturing a laminated sheet according to the fourth aspect, further including an extension step of stretching the film to reduce a thickness of the film, after the cooling step and before the layering step. A stretching ratio of the film in the extension step is set in accordance with a blending ratio of the second resin.

In the method for manufacturing a laminated sheet according to the fifth aspect, by changing the blending ratio of the second resin in accordance with an application or the like of the laminated sheet, the stretching ratio of the film in the extension step, that is, the film thickness to be formed can be appropriately adjusted.

A method for manufacturing a laminated sheet according to a sixth aspect is the method for manufacturing a laminated sheet according to the fourth or fifth aspect, in which the first resin is a styrene-based resin, and the second resin is an olefin-based resin.

A method for manufacturing a laminated sheet according to a seventh aspect is the method for manufacturing a laminated sheet according to the sixth aspect, in which a weight ratio between the first resin and the second resin is 1 : 0.33 to 0.54, and a content of the first resin and the second resin in the raw material is 90% by weight or more.

A method for manufacturing a laminated sheet according to an eighth aspect is the method for manufacturing a laminated sheet according to any one of the first to seventh aspects, in which, in the welding step, welding is performed at a plurality of welded portions. Each of the welded portions has a shape whose longitudinal direction is a direction intersecting a conveyance direction of the film and the nonwoven fabric.

In the method for manufacturing a laminated sheet according to the eighth aspect, a laminated sheet having high stretchability in a direction orthogonal to the longitudinal direction of the welded portion can be manufactured.

A method for manufacturing a laminated sheet according to a ninth aspect is the method for manufacturing a laminated sheet according to any one of the first to seventh aspects, in which, in the welding step, the film and the nonwoven fabric are welded at a plurality of welded portions. Each of the welded portions has a square shape or a circular shape.

In the method for manufacturing a laminated sheet according to the ninth aspect, a laminated sheet having high stretchability in both the conveyance direction and a direction orthogonal to the conveyance direction can be manufactured.

A method for manufacturing a laminated sheet according to a tenth aspect is the method for manufacturing a laminated sheet according to any one of the first to ninth aspects, in which a plurality of the welded portions arranged along a first direction intersecting a conveyance direction of the film and the nonwoven fabric form one welded portion group. The welded portion group includes a first welded portion group, and a second welded portion group arranged at a position shifted from the first welded portion group in a second direction orthogonal to the first direction. In the second welded portion group, the welded portions of the second welded portion group are arranged at positions different from positions of the welded portions of the first welded portion group, in the first direction.

In the method for manufacturing a laminated sheet according to the tenth aspect, by providing the first welded portion group and the second welded portion group, a laminated sheet having high stretchability can be manufactured.

A method for manufacturing a laminated sheet according to an eleventh aspect is the method for manufacturing a laminated sheet according to the tenth aspect, in which the first welded portion group and the second welded portion group are alternately arranged in the second direction. In the laminated sheet, the welded portions are arranged in a staggered manner.

In the method for manufacturing a laminated sheet according to the eleventh aspect, a laminated sheet having high stretchability can be manufactured by providing the welded portions in a staggered manner.

A method for manufacturing a laminated sheet according to a twelfth aspect is the method for manufacturing a laminated sheet according to the second aspect, in which, in the stretching step, the laminated sheet is stretched in the conveyance direction.

In the method for manufacturing a laminated sheet according to the twelfth aspect, a laminated sheet having high stretchability in the conveyance direction can be manufactured.

A method for manufacturing a laminated sheet according to a thirteenth aspect is the method for manufacturing a laminated sheet according to the second or twelfth aspect, in which, in the stretching step, the laminated sheet is stretched in a direction orthogonal to the conveyance direction.

In the method for manufacturing a laminated sheet according to the thirteenth aspect, a laminated sheet having high stretchability in the conveyance direction can be manufactured.

A method for manufacturing the laminated sheet L according to a fourteenth aspect is the method for manufacturing a laminated sheet according to the second, twelfth, or thirteenth aspect, further including a winding step of winding the laminated sheet to form a roll of the laminated sheet being wound, after the welding step and before the stretching step. In the stretching step, the film and the nonwoven fabric sheet of the laminated sheet fed from the roll and being conveyed are stretched.

In the method for manufacturing a laminated sheet according to the fourteenth aspect, even in a case where the laminated sheet is wound around a core to form the roll in a state where tension is applied to the laminated sheet to some extent, and the roll is transported or stored, a laminated sheet having high stretchability can be manufactured by activating the laminated sheet in the stretching step.

In addition, in the method for manufacturing a laminated sheet according to the fourteenth aspect, for example, in a case where a mixture of a styrene-based resin and an olefin-based resin is used for a raw material, plastic deformation of the olefin-based resin during stretching in the stretching step can be reduced, and a laminated sheet having high elasticity can be manufactured.

A system for manufacturing a laminated sheet for a wearing article according to a fifteenth aspect includes a film formation apparatus, a cooling apparatus, a layering apparatus, and a welding apparatus. The film formation apparatus is configured to form a film by extruding a raw material having been melted. The cooling apparatus is configured to cool the film having been extruded. The layering apparatus is configured to layer a nonwoven fabric being in a state of natural length and the film having elasticity, being conveyed, and being in a state of natural length. Alternatively, the layering apparatus is configured to layer a nonwoven fabric being in a state of natural length and the film having elasticity, being conveyed, and being stretched in a conveyance direction and being at an elongation of 15% or less. The welding apparatus is configured to weld the film and the nonwoven fabric having been layered and being conveyed, to form a laminated sheet.

In the system for manufacturing a laminated sheet according to the fifteenth aspect, since the nonwoven fabric being in a state of natural length and the film being in a state of natural length or the film being at an elongation of 15% or less (being stretched merely 15% or less with respect to the natural length) are laminated, a laminated sheet having a low basis weight (a low weight of the nonwoven fabric per unit area) can be manufactured, as compared with a case in which a laminated sheet is formed by laminating the film in a greatly stretched state and the nonwoven fabric.

In addition, in the system for manufacturing a laminated sheet according to the fifteenth aspect, by welding the film and the nonwoven fabric, an opening is formed in a welded portion or therearound at the time of welding. The nonwoven fabric is also easily deformed by forming the opening, and thus a laminated sheet having a high elongation property can be manufactured, in this method for manufacturing a laminated sheet. Further, in this manufacturing method, since the opening is formed, a laminated sheet having excellent air permeability can be manufactured.

A system for manufacturing a laminated sheet according to a sixteenth aspect is the manufacturing system according to the fifteenth aspect, further including an extension apparatus configured to stretch the film to reduce a thickness of the film, after the film has been cooled by the cooling apparatus.

In the system for manufacturing a laminated sheet according to the sixteenth aspect, by reducing the thickness of the film having elasticity and forming the laminated sheet, it is possible to manufacture a laminated sheet that is easily deformed with a relatively small force and that is less likely to give a strong feeling of tightness to a wearer of the wearing article. In addition, a laminated sheet having a low basis weight (here, a low weight of the film per unit area) can be manufactured by reducing the thickness of the film forming the laminated sheet.

A system for manufacturing a laminated sheet according to a seventeenth aspect is the manufacturing system according to the fifteenth or sixteenth aspect, in which the welding apparatus is configured to weld the film and the nonwoven fabric at a plurality of welded portions by sandwiching the film and the nonwoven fabric between a first member and a second member. The first member includes a first portion and a second portion. The first portion is configured to form, in the film and the nonwoven fabric, a first welded portion group including a plurality of the welded portions arranged along a first direction intersecting a conveyance direction of the film and the nonwoven fabric. The second portion is configured to form, in the film and the nonwoven fabric, a second welded portion group including a plurality of the welded portions arranged along the first direction, at a position shifted from the first welded portion group in a second direction orthogonal to the first direction. In the second welded portion group, the welded portions of the second welded portion group are arranged at positions different from positions of the welded portions of the first welded portion group, in the first direction.

In the system for manufacturing a laminated sheet according to the seventeenth aspect, a laminated sheet having high stretchability can be manufactured.

A system for manufacturing a laminated sheet according to an eighteenth aspect is the manufacturing system according to any one of the fifteenth to seventeenth aspects, further including a stretching apparatus. A stretching apparatus is configured to stretch, in a conveyance direction of the film and the nonwoven fabric or in a direction orthogonal to the conveyance direction, the film and the nonwoven fabric, integrated by welding and being conveyed, to form an opening in a welded portion of the film and the nonwoven fabric and/or around the welded portion, and/or to widen the opening.

In the system for manufacturing a laminated sheet according to the eighteenth aspect, in particular, a laminated sheet having a high elongation and excellent air permeability can be manufactured.

In a laminated sheet for a wearing article according to a nineteenth aspect, a film having elasticity and a nonwoven fabric are laminated. The film and the nonwoven fabric are integrated by welding. When the nonwoven fabric is at a natural length, tension does not act on the film.

In the laminated sheet according to the nineteenth aspect, since the laminated sheet is in a state where tension does not act on the film when the nonwoven fabric is at a natural length, an amount of the nonwoven fabric used per unit area can be reduced. In addition, in the laminated sheet according to the nineteenth aspect, by forming an opening in a welded portion or therearound when the film and the nonwoven fabric are welded, the nonwoven fabric is easily deformed, and thus a laminated sheet having a high elongation is obtained. Further, since air can pass through the opening, a laminated sheet having high air permeability is obtained.

A laminated sheet according to a twentieth aspect is the laminated sheet according to the nineteenth aspect, in which the film and the nonwoven fabric are welded at a plurality of welded portions arranged along a first direction. The plurality of welded portions arranged along the first direction form one welded portion group. The welded portion group includes a first welded portion group, and a second welded portion group arranged at a position shifted from the first welded portion group in a second direction orthogonal to the first direction. In the second welded portion group, the welded portions of the second welded portion group are arranged at positions different from positions of the welded portions of the first welded portion group, in the first direction.

In the laminated sheet according to the twentieth aspect, by providing the first welded portion group and the second welded portion group, a laminated sheet having high stretchability can be manufactured.

A laminated sheet according to a twenty-first aspect is the laminated sheet according to the nineteenth or twentieth aspect, in which the film and the nonwoven fabric are welded at a plurality of welded portions arranged along a first direction. Each of the welded portions has a shape whose longitudinal direction is the first direction, or a square shape or a circular shape.

In the laminated sheet according to the twenty-first aspect, a laminated sheet having high stretchability in a direction orthogonal to the first direction, or in the direction orthogonal to the first direction and the first direction can be manufactured.

### Reference Signs List

- 20: Discharge mechanism (film formation apparatus)
- 30: Cooling roll (cooling apparatus)
- 38: Film stretching mechanism (extension apparatus)
- 40: Stretching roll (first member)
- 401: First protrusion (first portion)
- 402: Second protrusion (second portion)
- 43: Horn (second member)
- 48: Layering and bonding mechanism (layering apparatus, welding apparatus)
- 60: Laminated sheet stretching mechanism (stretching apparatus)
- A: Conveyance direction
- D1: First direction
- D2: Second direction
- F: Film
- J: Welded portion
- J1: First welded portion group
- J2: Second welded portion group
- L: Laminated sheet
- S1: First nonwoven fabric sheet (nonwoven fabric)
- S2: Second nonwoven fabric sheet (nonwoven fabric)
- Op: Opening
- P1: Film formation step
- P2: Cooling step
- P3: Extension step
- P4: Layering step
- P5: Welding step
- P6: Stretching step
- R: Roll

## Claims

1. A method for manufacturing a laminated sheet for a wearing article, the method comprising:
a film formation step of forming a film by extruding a raw material having been melted;
a cooling step of cooling the film having been extruded;
a layering step of layering a nonwoven fabric being in a state of natural length and the film having elasticity and being in a state of natural length, or layering a nonwoven fabric being in a state of natural length and the film having elasticity, being conveyed, and being stretched in a conveyance direction and being at an elongation of 15% or less; and
a welding step of welding the film and the nonwoven fabric having been layered and being conveyed, to form a laminated sheet.

2. The method for manufacturing a laminated sheet according to claim 1, further comprising a stretching step of stretching the film and the nonwoven fabric, integrated by welding and being conveyed, to form an opening in a welded portion of the film and the nonwoven fabric and/or around the welded portion, and/or to widen the opening.

3. The method for manufacturing a laminated sheet according to claim 1 or 2, further comprising an extension step of stretching the film to reduce a thickness of the film, after the cooling step and before the layering step.

4. The method for manufacturing a laminated sheet according to any one of claims 1 to 3, wherein
the raw material contains a first resin and a second resin having different conditions under each of which stretchability reaches stability, and
in the cooling step, the film is cooled to a first temperature at which stretchability of the second resin does not reach a stable state and stretchability of the first resin reaches a stable state.

5. The method for manufacturing a laminated sheet according to claim 4, further comprising an extension step of stretching the film to reduce a thickness of the film, after the cooling step and before the layering step, wherein
a stretching ratio of the film in the extension step is set in accordance with a blending ratio of the second resin.

6. The method for manufacturing a laminated sheet according to claim 4 or 5, wherein the first resin is a styrene-based resin, and the second resin is an olefin-based resin.

7. The method for manufacturing a laminated sheet according to claim 6, wherein a weight ratio between the first resin and the second resin is 1 : 0.33 to 0.54, and a content of the first resin and the second resin in the raw material is 90% by weight or more.

8. The method for manufacturing a laminated sheet according to any one of claims 1 to 7, wherein in the welding step, the film and the nonwoven fabric are welded at a plurality of welded portions, and each of the welded portions has a shape whose longitudinal direction is a direction intersecting a conveyance direction of the film and the nonwoven fabric.

9. The method for manufacturing a laminated sheet according to any one of claims 1 to 7, wherein in the welding step, the film and the nonwoven fabric are welded at a plurality of welded portions, and each of the welded portions has a square shape or a circular shape.

10. The method for manufacturing a laminated sheet according to any one of claims 1 to 9, wherein a plurality of the welded portions arranged along a first direction intersecting a conveyance direction of the film and the nonwoven fabric form one welded portion group, and the welded portion group includes a first welded portion group, and a second welded portion group that is arranged at a position shifted from the first welded portion group in a second direction orthogonal to the first direction, and in which the welded portions of the second welded portion group are arranged at positions different from positions of the welded portions of the first welded portion group, in the first direction.

11. The method for manufacturing a laminated sheet according to claim 10, wherein
the first welded portion group and the second welded portion group are alternately arranged in the second direction, and
in the laminated sheet, the welded portions are arranged in a staggered manner.

12. The method for manufacturing a laminated sheet according to claim 2, wherein in the stretching step, the laminated sheet is stretched in the conveyance direction.

13. The method for manufacturing a laminated sheet according to claim 2 or 12, wherein in the stretching step, the laminated sheet is stretched in a direction orthogonal to the conveyance direction.

14. The method for manufacturing a laminated sheet according to claim 2, 12, or 13, further comprising a winding step of winding the laminated sheet to form a roll of the laminated sheet being wound, after the welding step and before the stretching step, wherein
in the stretching step, the film and the nonwoven fabric of the laminated sheet fed from the roll and being conveyed are stretched.

15. A system for manufacturing a laminated sheet for a wearing article, the system comprising:
a film formation apparatus configured to form a film by extruding a raw material having been melted;
a cooling apparatus configured to cool the film having been extruded;
a layering apparatus configured to layer a nonwoven fabric being in a state of natural length and the film having elasticity and being in a state of natural length, or layer a nonwoven fabric being in a state of natural length and the film having elasticity, being conveyed, and being stretched in a conveyance direction and being at an elongation of 15% or less; and
a welding apparatus configured to weld the film and the nonwoven fabric having been layered and being conveyed, to form a laminated sheet.

16. The system for manufacturing a laminated sheet according to claim 15, further comprising an extension apparatus configured to stretch the film to reduce a thickness of the film, after the film has been cooled by the cooling apparatus.

17. The system for manufacturing a laminated sheet according to claim 15 or 16, wherein
the welding apparatus is configured to weld the film and the nonwoven fabric at a plurality of welded portions by sandwiching the film and the nonwoven fabric between a first member and a second member,
the first member includes: a first portion configured to form, in the film and the nonwoven fabric, a first welded portion group including a plurality of the welded portions arranged along a first direction intersecting a conveyance direction of the film and the nonwoven fabric; and a second portion configured to form, in the film and the nonwoven fabric, a second welded portion group including a plurality of the welded portions arranged along the first direction, at a position shifted from the first welded portion group in a second direction orthogonal to the first direction, and
in the second welded portion group, the welded portions of the second welded portion group are arranged at positions different from positions of the welded portions of the first welded portion group, in the first direction.

18. The system for manufacturing a laminated sheet according to any one of claims 15 to 17, further comprising a stretching apparatus configured to stretch, in a conveyance direction of the film and the nonwoven fabric or in a direction orthogonal to the conveyance direction, the film and the nonwoven fabric, integrated by welding and being conveyed, to form an opening in a welded portion of the film and the nonwoven fabric and/or around the welded portion, and/or to widen the opening.

19. A laminated sheet for a wearing article in which a film having elasticity and a nonwoven fabric are laminated, wherein
the film and the nonwoven fabric are integrated by welding, and
when the nonwoven fabric is at a natural length, tension does not act on the film.

20. The laminated sheet according to claim 19, wherein
the film and the nonwoven fabric are welded at a plurality of welded portions arranged along a first direction,
the plurality of welded portions arranged along the first direction form one welded portion group, and
the welded portion group includes a first welded portion group, and a second welded portion group that is arranged at a position shifted from the first welded portion group in a second direction orthogonal to the first direction, and in which the welded portions of the second welded portion group are arranged at positions different from positions of the welded portions of the first welded portion group, in the first direction.

21. The laminated sheet according to claim 19 or 20, wherein
the film and the nonwoven fabric are welded at a plurality of welded portions arranged along a first direction, and
each of the welded portions has a shape whose longitudinal direction is the first direction, or a square shape or a circular shape.
